# EUROPEAN PATENT SPECIFICATION

(11) **EP 3 625 876 B1**
(45) Date of publication and mention of the grant of the patent: **02.11.2022**
(21) Application number: 18728204.1
(22) Date of filing: 15.05.2018
(51) Int. Cl.: H02K 3/487

(54) **A SLOT-WEDGE OF AN ELECTRIC MACHINE**
NUTKEIL EINER ELEKTRISCHEN MASCHINE
CALE D'ENCOCHE D'UNE MACHINE ÉLECTRIQUE

(30) Priority: 16.05.2017 FI 20175444
(43) Date of publication of application: 25.03.2020
(73) Proprietor: Lappeenrannan-Lahden teknillinen yliopisto LUT, 53851 Lappeenranta (FI)
(72) Inventor: PYRHÖNEN, Juha, 53851 Lappeenranta (FI)
(74) Representative: Väänänen, Janne Kalervo
(86) International application number: PCT/FI2018/050361
(87) International publication number: WO 2018/211174

(56) References cited:
- WO-A2-2016/091360
- DE-A1-102013 218 822
- JP-A- 2004 297 876
- JP-A- 2005 269 716

## Description

### Field of the technology

The disclosure relates generally to rotating electric machines. More particularly, the disclosure relates to a slot-wedge of an electric machine.

### Background

In many cases, an electric drive comprises a frequency converter arranged to supply alternating voltages to an electric machine. The frequency converter produces high voltage gradients, i.e. high du/dt values, on windings of the electric machine as a corollary of fast switching operations of power electronic components such as e.g. Insulated Gate Bipolar Transistors "IGBT". The high voltage gradients cause in turn capacitively coupled stray currents through electric insulators between the windings and the core structure of the electric machine and also through the airgap of the electric machine. The above-mentioned stray currents may flow through the bearings of the electric machine and/or through mechanical devices such as gears which are connected to the shaft of the electric machine. The stray currents are harmful as they may damage the bearings and/or the mechanical devices connected to the shaft of the electric machine.

A known solution to reduce bearing currents is to use bearings which are electrically insulated from the frame of an electric machine. This approach is however not free from challenges. On one hand, an insulator layer between a bearing and the frame may need to be relatively thick in order to achieve sufficient impedance against high frequency stray currents. On the other hand, it may be challenging to achieve sufficient mechanical strength when the insulator layer is thick. Another known solution against bearing currents is to use insulated bearings where balls or other roller elements are made of electrically non-conductive material such as e.g. ceramics. A drawback of insulated bearings of the kind mentioned above is that they are relatively expensive. A third known solution against bearing currents and also against other stray currents is to provide a frequency converter with output inductors or filters which reduce the voltage gradients. In many cases there can be, however, a need to design case-specific inductors or filters for different lengths of a cable of an electric machine. Therefore, standardization can be difficult with this approach. A fourth known approach is to provide slot insulators of an electric machine with electrical conductors which are grounded so as to form a capacitive shield for reducing capacitive currents from windings to a core structure. Capacitive shielding of the kind mentioned above has its advantages and thus there is a need for further development of structures for implementing capacitive shielding.

WO201609136OA2 discloses a slot-wedge according to the preamble of claim 1 of the appended claims.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In this document, the word "geometric" when used as a prefix means a geometric concept that is not necessarily a part of any physical object. The geometric concept can be for example a geometric point, a straight or curved geometric line, a geometric plane, a non-planar geometric surface, a geometric space, or any other geometric entity that is zero, one, two, or three dimensional.

In accordance with the invention, there is provided a new slot-wedge for an electric machine. The slot-wedge according to the invention comprises:
- sheet portions being one on the other and constituting a layered structure, and
- one or more electric conductor strips between the sheet portions without being inside material of any of the sheet portions so as to constitute a capacitive shield when the slot-wedge is between adjacent teeth of the electric machine.

The above-mentioned sheet portions are portions of a sheet that is bent on longitudinal side regions of the slot-wedge along geometric lines parallel with the longitudinal direction of the slot-wedge so that the portions of the sheet are arranged to be one on the other and the layered structure constituted by the sheet portions is a flattened roll of the sheet.

The above-mentioned sheet or sheets constituting the layered structure can be made of, for example but not necessarily, fiber reinforced resin or fiber reinforced plastic. In cases where a magnetic slot-wedge is needed, the resin or plastic can be mixed with magnetically amplifying material whose relative permeability is greater than one, i.e. µᵣ > 1. The magnetically amplifying material can be for example iron powder.

In accordance with the invention, there is provided also a new electric machine. The electric machine comprises:
- a stator,
- a rotor rotatably supported with respect to the stator, at least one of the rotor and the stator comprising a core structure and windings whose coil sides are located in slots of the core structure,
- slot-wedges according to the invention and arranged to close the slots of the core structure, and
- electric conductors having galvanic connections with the stator and coupled to first ends of the electric conductor strips of the slot-wedges, the second ends of the electric conductor strips being open conductor ends.

The electric conductor strips of the slot-wedges constitute a capacitive shield which reduce capacitively coupled currents between the coil sides and the rotor. In some cases, the capacitive shield can reduce also capacitively coupled currents between the coil sides and the stator core, at least in some extent.

A number of exemplifying and non-limiting embodiments of the invention are described in accompanied dependent claims.

Various non-limiting exemplifying embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of also un-recited features. Furthermore, it is to be understood that the use of "a" or "an", i.e. a singular form, throughout this document does not exclude a plurality.

### Brief description of figures

Exemplifying and non-limiting embodiments of the invention and their advantages are explained in greater detail below in the sense of examples and with reference to the accompanying drawings, in which:
figure 1 shows a section view of a detail of an electric machine that comprises a slot-wedge according to an exemplifying and non-limiting embodiment of the invention, and
figures 2a and 2b illustrate a slot-wedge according to an example not forming a part of the invention.

### Description of exemplifying and non-limiting embodiments

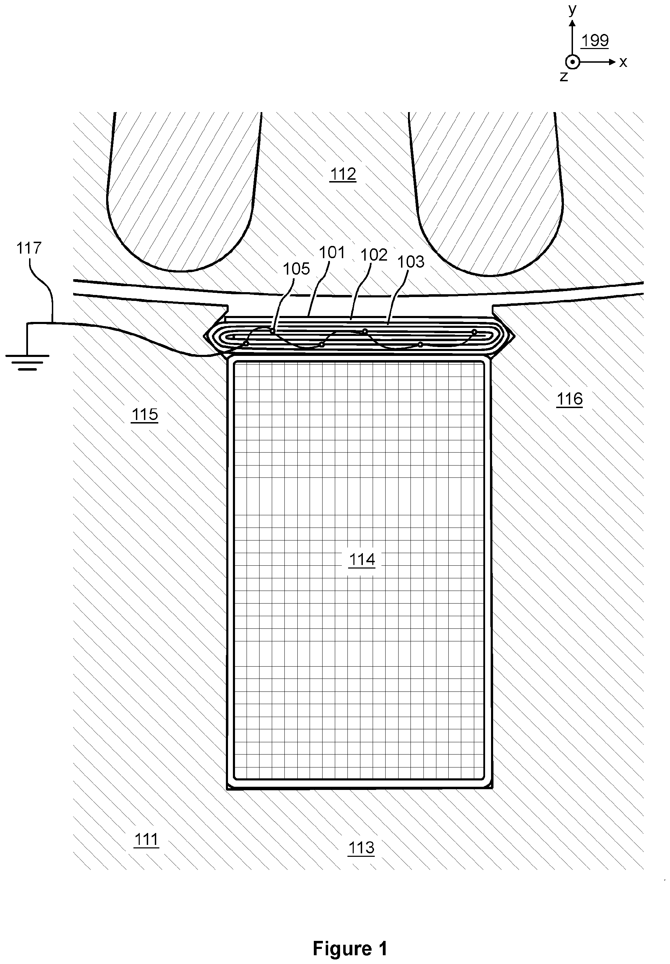

Figure 1 shows a section view of a detail of an electric machine that comprises a slot-wedge 101 according to an exemplifying and non-limiting embodiment of the invention. The section is taken along a geometric plane parallel with the xy-plane of a coordinate system 199. Figure 1 illustrates a part of a stator 111 of the electric machine and a part of a rotor 112 of the electric machine. The rotor 112 is rotatably supported with respect to the stator 111 so that there is an airgap between the stator and the rotor. The geometric rotation axis of the rotor 112 is parallel with the z-axis of the coordinate system 199. The stator comprises a core structure 113 and windings whose coil sides are located in slots of the core structure. Figure 1 illustrates a coil side 114 which is located in the slot between adjacent teeth 115 and 116 of the core structure 113. The slot-wedge 101 is located between the adjacent teeth 115 and 116 and closes the slot opening of the above-mentioned slot of the core structure 113.

The slot-wedge 101 comprises sheet portions which are one on the other so that the sheet portions constitute a layered structure. In figure 1, two of the sheet portions are denoted with references 102 and 103. The sheet portions, and thereby the layered structure, are advantageously made of electrically insulating material such as for example fiber reinforced resin or fiber reinforced plastic. The slot-wedge 101 further comprises electric conductor strips between the sheet portions. In figure 1, one of the electric conductor strips is denoted with a reference 105. The electric conductor strips of the slot-wedge 101 constitute a capacitive shield for reducing capacitively coupled currents between the coil side 114 and the rotor 112 when the electric conductor strips are connected to a constant electric potential. Therefore, the electric conductor strips of the slot-wedge 101 reduce e.g. bearing currents of the electric machine.

The electric machine comprises electric conductors which have galvanic connections with the stator 111 and which are coupled to first ends of the electric conductor strips of the slot-wedges of the electric machine. The second ends of the electric conductor strips of the slot-wedges are open conductor ends. The electric conductors can be connected for example to the frame of the electric machine, to the core structure 113 of the stator, or to another place from which there is a galvanic connection to the core structure 113 of the stator. Figure 1 illustrates schematically an electric conductor 117 which is coupled to the electric conductor strips of the slot-wedge 101.

The exemplifying electric machine which is partially illustrated in figure 1 can be an induction machine. It is also possible that slot-wedges of the kind described above are used in an electric machine type other than an induction machine. The electric machine can be e.g. a permanent magnet machine, an electrically excited synchronous machine, a reluctance machine, or a direct current machine, i.e. a "DC" machine.

In the exemplifying slot-wedge 101 illustrated in figure 1, the sheet portions are portions of a single sheet that is bent on longitudinal side regions of the slot-wedge 101 along geometric lines parallel with a longitudinal direction of the slot-wedge so that the portions of the sheet are arranged to be one on the other. As illustrated in figure 1, the layered structure of the slot-wedge 101 is a flattened roll of the above-mentioned sheet. The sheet portions can be attached to each other with suitable adhesive material, or the sheet portions can be fused together.

In the exemplifying slot-wedge 101 illustrated in figure 1, each of the electric conductor strips has an elongated shape and is substantially parallel with a longitudinal direction of the slot-wedge. Each conductor strip can be e.g. a roundwire.

In a slot-wedge according to an exemplifying and non-limiting embodiment of the invention, the sheet portions comprise magnetically amplifying material whose relative permeability is greater than one, i.e. µᵣ > 1. The sheet portions may further comprise magnetically non-amplifying material arranged to mechanically support the magnetically amplifying material, the relative permeability of the magnetically non-amplifying material being at most one. The magnetically amplifying material can be for example iron powder, and the magnetically non-amplifying material can be for example fiber reinforced resin or fiber reinforced plastic.

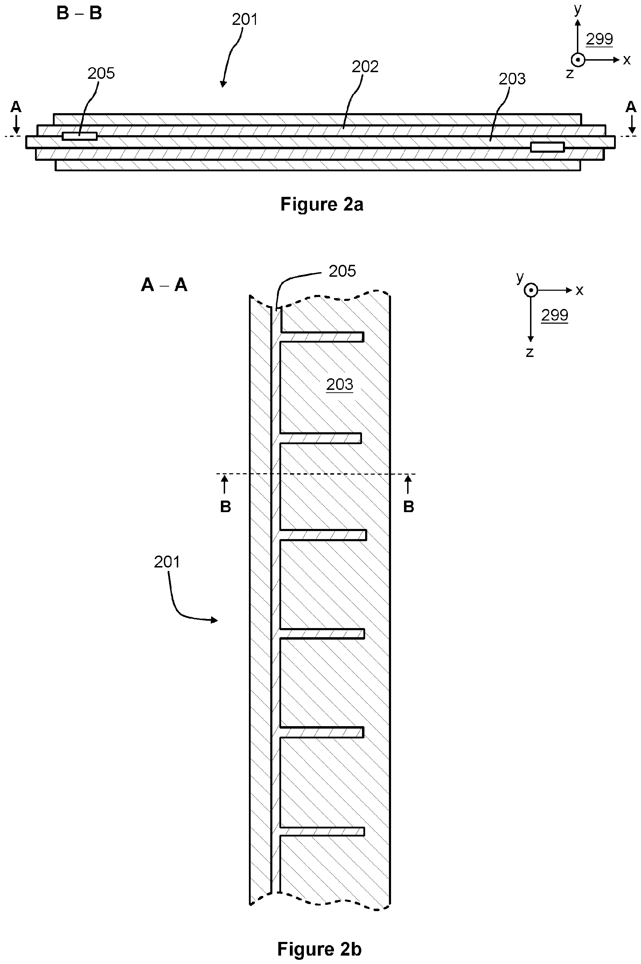

Figures 2a and 2b illustrate a slot-wedge 201 according to an example not forming a part of the invention. Figure 2a shows a view of a section taken along a line B-B shown in figure 2b, and figure 2b shows a view of a section taken along a line A-A shown in figure 2a. The section plane related to figure 2a is parallel with the xy-plane of a coordinate system 299, and the section plane related to figure 2b is parallel with the xz-plane of the coordinate system 299. The slot-wedge 201 comprises sheet portions which are one on the other so that the sheet portions constitute a layered structure. As illustrated in figure 2a, the layered structure of the slot-wedge 201 is a stack of the above-mentioned sheet portions. The sheet portions can be attached to each other with suitable adhesive material, or the sheet portions can be fused together. In figure 2a, two of the sheet portions are denoted with references 202 and 203. The slot-wedge 201 further comprises electric conductor strips between the sheet portions. In figures 2a and 2b, one of the electric conductor strips of the slot-wedge 201 is denoted with a reference 205. In this exemplifying case, each electric conductor strips has an elongated portion in the longitudinal direction of the slot-wedge 201 and a plurality of branch portions in the transversal direction of the slot-wedge 201 so that the branch portions are connected to the longitudinal elongated portion. It is worth noting that many different shapes are possible for the electric conductor strips. Each conductor strip is advantageously shaped so that the electric conductor strip is free from closed loops because a changing magnetic flux via a closed loop would induce currents in the closed loop.

## Claims

1. A slot-wedge (101) for an electric machine, the slot-wedge comprising sheet portions (102, 103) being one on the other and constituting a layered structure, wherein the slot-wedge comprises one or more electric conductor strips (105) between the sheet portions without being inside material of any of the sheet portions so as to constitute a capacitive shield when the slot-wedge is located between adjacent teeth of the electric machine, and wherein the sheet portions (102, 103) are portions of a sheet that is bent on longitudinal side regions of the slot-wedge along geometric lines parallel with a longitudinal direction of the slot-wedge so that the portions of the sheet are arranged to be one on the other, **characterized in that** the layered structure is a flattened roll of the sheet.

2. A slot-wedge according to claim 1, wherein each of the one or more electric conductor strips (105) has an elongated shape and is substantially parallel with a longitudinal direction of the slot-wedge.

3. A slot-wedge according claim 2, wherein the one or more electric conductor strips (105) are one or more round-wires.

4. A slot-wedge according to any of claims 1-3, wherein the sheet portions comprise magnetically amplifying material whose relative permeability is greater than one.

5. A slot-wedge according to claim 4, wherein the sheet portions further comprise magnetically non-amplifying material arranged to mechanically support the magnetically amplifying material, the relative permeability of the magnetically non-amplifying material being at most one.

6. An electric machine comprising:
- a stator (111),
- a rotor (112) rotatably supported with respect to the stator, at least one of the rotor and the stator comprising a core structure (113) and windings whose coil sides (114) are located in slots of the core structure,
- slot-wedges (101) according to any of claims 1-5 and arranged to close the slots of the core structure, and
- electric conductors (117) having galvanic connections with the stator and coupled to first ends of the electric conductor strips of the slot-wedges, second ends of the electric conductor strips being open conductor ends.

## Patentansprüche

1. Nutkeil (101) für eine elektrische Maschine, wobei der Nutkeil aufeinanderliegende Folienabschnitte (102, 103) aufweist, die einen Schichtaufbau bilden, wobei der Nutkeil einen oder mehrere elektrische Leiterstreifen (105) aufweist, die sich zwischen den Folienabschnitten befinden, ohne Innenmaterial eines der Folienabschnitte zu sein, um eine kapazitive Abschirmung zu bilden, wenn der Nutkeil zwischen benachbarten Zähnen der elektrischen Maschine angeordnet ist, und wobei die Folienabschnitte (102, 103) Abschnitte aus einer Folie sind, die an längsseitigen Bereichen des Nutkeils entlang geometrischer Linien parallel zu einer Längsrichtung des Nutkeils gebogen ist, so dass die Abschnitte der Folie übereinander angeordnet sind, **dadurch gekennzeichnet, dass** die Schichtstruktur eine flachgedrückte Rolle aus der Folie ist.

2. Nutkeil nach Anspruch 1, wobei jeder der einen oder mehreren elektrischen Leiterstreifen (105) eine längliche Form hat und im Wesentlichen parallel zu einer Längsrichtung des Nutkeils ist.

3. Nutkeil nach Anspruch 2, wobei der eine oder die mehreren elektrischen Leiterstreifen (105) einer oder mehrere Runddrähte sind.

4. Nutkeil nach einem der Ansprüche 1 bis 3, wobei die Folienabschnitte magnetisch verstärkendes Material aufweisen, dessen relative Permeabilität größer als eins ist.

5. Nutkeil nach Anspruch 4, wobei die Folienabschnitte ferner magnetisch nicht verstärkendes Material aufweisen, das zur mechanischen Stützung des magnetisch verstärkenden Material angeordnet ist, wobei die relative Permeabilität des magnetisch nicht verstärkenden Materials höchstens eins ist.

6. Elektrische Maschine, aufweisend:
- einen Stator (111),
- einen bezüglich des Stators drehbar gelagerten Rotor (112), wobei mindestens einer des Rotors oder des Stators eine Kernstruktur (113) und Wicklungen aufweisen, deren Spulenseiten (114) in Nuten der Kernstruktur angeordnet sind,
- Nutkeile (101) nach einem der Ansprüche 1 bis 5, die dazu angeordnet sind, die Nuten der Kernstruktur zu schließen, und
- elektrische Leiter (117), die galvanische Verbindungen mit dem Stator haben und mit ersten Enden der elektrischen Leiterstreifen der Nutkeile gekoppelt sind, wobei zweite Enden der elektrischen Leiterstreifen offene Leiterenden sind.

## Revendications

1. Cale d'encoche (101) pour une machine électrique, la cale d'encoche comprenant des parties en feuille (102, 103) étant l'une sur l'autre et constituant une structure en couches, dans lequel la cale d'encoche comprend une ou plusieurs bandes conductrices d'électricité (105) entre les parties en feuille sans qu'il n'y ait dedans du matériau de n'importe quelle des parties en feuille de manière à constituer un blindage capacitif lorsque la cale d'encoche est située entre des dents adjacentes de la machine électrique, et dans lequel les parties en feuille (102, 103) sont des parties d'une feuille qui est courbée sur des régions latérales longitudinales de la cale d'encoche le long de lignes géométriques parallèles à une direction longitudinale de la cale d'encoche de façon à ce que les parties de la feuille soient agencées pour être l'une sur l'autre, **caractérisé en ce que** la structure en couches est un rouleau aplati de la feuille.

2. Cale d'encoche selon la revendication 1, dans lequel chacune des une ou plusieurs bandes conductrices d'électricité (105) présente une forme allongée et est essentiellement parallèle à une direction longitudinale de la cale d'encoche.

3. Cale d'encoche selon la revendication 2, dans lequel les une ou plusieurs bandes conductrices d'électricité (105) sont un ou plusieurs fils ronds.

4. Cale d'encoche selon l'une quelconque des revendications 1 - 3, dans lequel les parties en feuille comprennent du matériau à amplification magnétique dont la perméabilité relative est supérieure à un.

5. Cale d'encoche selon la revendication 4, dans lequel les parties en feuille comprennent du matériau à non-amplification magnétique, la perméabilité relative du matériau à non-amplification magnétique étant au moins d'un.

6. Machine électrique comprenant :
- un stator (111),
- un rotor (112) supporté de manière rotative par rapport au stator, au moins un du rotor et du stator comprenant une structure de noyau (113) et des enroulements dont les côtés de bobine (114) sont situés dans des fentes de la structure de noyau,
- des cales d'encoche (101) selon l'une quelconque des revendications 1-5 et agencées pour fermer les fentes de la structure de noyau, et
- des conducteurs électriques (117) ayant des connexions galvaniques avec le stator et couplées à des premières extrémités des bandes conductrices d'électricité des cales d'encoche, des secondes extrémités des bandes conductrices d'électricité étant des extrémités conductrices ouvertes.
